# EUROPEAN PATENT SPECIFICATION

(11) **EP 2 622 708 B1**
(45) Date of publication and mention of the grant of the patent: **03.04.2019**
(21) Application number: 11828074.2
(22) Date of filing: 21.09.2011
(51) Int. Cl.: B60L 3/00, H02J 7/00, H02J 7/35, B60L 8/00, B60L 11/18

(54) **CONTROL SYSTEM AND METHOD FOR POWERING VEHICLE WITH SOLAR ENERGY**
STEUERSYSTEM UND -VERFAHREN ZUM ANTREIBEN EINES FAHRZEUGS MIT SONNENENERGIE
SYSTÈME DE COMMANDE ET PROCÉDÉ D'ALIMENTATION DE VÉHICULE AVEC DE L'ÉNERGIE SOLAIRE

(30) Priority: 30.09.2010 CN 201010296994
(43) Date of publication of application: 07.08.2013
(73) Proprietor: BYD Company Limited, Shenzhen 518118 (CN); Shenzhen BYD Auto R&D Company Limited, Shenzhen, Guangdong 518118 (CN)
(72) Inventor: XU, Yang, Guangdong 518118 (CN); LIANG, Shulin, Guangdong 518118 (CN); ZHANG, Jianhua, Guangdong 518118 (CN)
(74) Representative: Zimmermann, Tankred Klaus
(86) International application number: PCT/CN2011/079973
(87) International publication number: WO 2012/041178

(56) References cited:
- WO-A1-2008/127016
- CN-Y- 201 113 461
- JP-A- 6 078 474
- JP-A- H11 191 902
- JP-A- 2004 080 914
- US-A1- 2009 001 926
- US-A1- 2010 213 887
- US-B1- 6 369 462

## Description

### CROSS-REFERENCE TO RELATED APPLICATIONS

The present application claims priority to and benefits of Chinese Patent Application No. 201010296994.8 filed with SIPO on September 30, 2010

### FIELD

The present disclosure relates to the field of powering a vehicle, more particularly to a control system and method for powering a vehicle with solar energy.

### BACKGROUND

To settle problems of energy shortage and ever more severe environmental pollution, new energy, including electric energy and solar energy etc., has already been adopted in vehicles. One example is described in US2009/001926.

The utilization of the solar energy to charge the vehicle not only reduces the environmental pollution but also increases the driving range of the vehicle.

At present, the application of the solar battery to electric vehicles is to provide power to the power battery after starting the vehicle. The disadvantage resides in that the solar energy is wasted for vehicles when the vehicle is stopping or parking. Thus, maximum utilization of the solar energy is not realized for charging the vehicle.

### SUMMARY

In viewing thereof, the present invention is directed to solve at least one of the problems existing in the prior art. Accordingly, a control system for powering a vehicle with solar energy may need to provided, which may utilize solar energy maximally to power the vehicle. Further, a control method for powering a vehicle with solar energy may need to be provided.

Accordingly, according to an embodiment of the present disclosure, a system for powering a vehicle with solar energy may be provided, comprising: a solar battery unit for converting the solar energy; a buck DC/DC converter electrically connected with the solar battery unit with a first switch, which is electrically connected with a low-voltage load and a starting battery respectively; a boost DC/DC converter electrically connected with the solar battery unit with a second switch, which is electrically connected with a high-voltage load; an auxiliary power module electrically connected with the solar battery unit; a control module connected with the solar battery unit, the buck DC/DC converter, the boost DC/DC converter; a power battery pack electrically connected with the boost DC/DC converter via a main contactor; a battery manager eclectically connected with the control module, the power battery pack, the starting battery via a third switch, and the auxiliary power module via a fourth switch respectively; and a photosensitive sensor connected with the control module.

According to another embodiment of the present disclosure, a control method of the control system for powering a vehicle with solar energy as described hereinabove may be provided, which may comprise the steps of: powering the control module via the auxiliary power module by the solar battery unit when an output power of the solar battery unit has an output power greater than a predetermined start threshold P of the auxiliary power module; powering the low-voltage load and the starting battery with the solar battery unit via the buck DC/DC converter under the control of the control module when the vehicle is running; and powering the power battery pack with the solar battery unit via the boost DC/DC converter under the control of the control module when the vehicle is parking.

According to the present disclosure, when the vehicle is running or parking etc, the solar energy from the solar battery unit is always provided to the vehicle, realizing the maximum utilization of the solar energy so that unnecessary waste of the solar energy may be avoided.

Additional aspects and advantages of the embodiment of present invention will be given in part in the following descriptions, become apparent in part from the following descriptions, or be learned from the practice of the embodiment present invention.

### BRIEF DESCRIPTION OF THE DRAWINGS

These and other aspects and advantages of the invention will become apparent and more readily appreciated from the following descriptions taken in conjunction with the drawings in which:
Fig. 1 is a schematic diagram illustrating a control system of a solar power supply according to an embodiment of the present disclosure.
Fig. 2 is a schematic diagram illustrating a control system of a solar power supply according to another embodiment of the present disclosure.
Fig. 3 is a flow chart illustrating a control method of a control system for powering a vehicle with solar energy according to an embodiment of the present disclosure.

### DETAILED DESCRIPTION

Reference will be made in detail to embodiment of the present disclosure. The embodiment described herein with reference to drawings are explanatory, illustrative, and used to generally understand the present disclosure. The embodiment shall not be construed to limit the present disclosure. The same or similar elements and the elements having same or similar functions are denoted by like reference numerals throughout the descriptions.

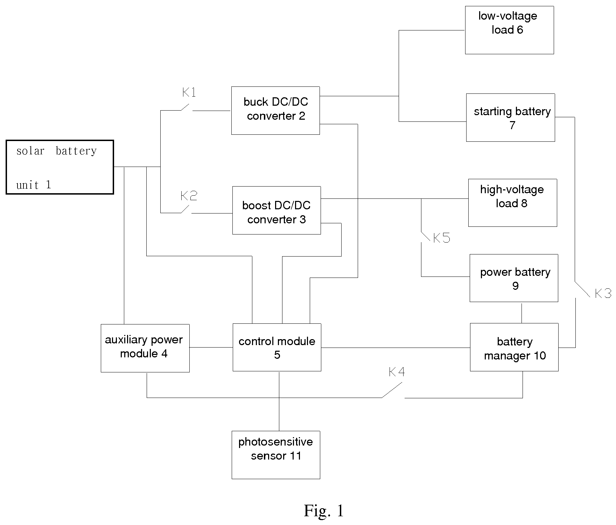

As shown in Fig. 1, a control system for powering a vehicle with solar energy is schematically shown. The control system may comprise a solar battery unit 1, such as for example a solar battery pack, a buck DC/DC converter 2, a boost DC/DC converter 3, a control module 5, a low-voltage load 6, a starting battery 7, a high-voltage load 8, a power battery pack 9, an auxiliary power module 4, a photosensitive sensor 11, a main contactor K5, a fist switch K1, a second switch K2, a third switch K3, and a fourth switch K4. The solar battery unit 1 is connected to the auxiliary power module 4 and the control module 5 respectively, which is connected to the DC/DC buck 2 converter via the first switch K1 and connected to the boost DC/DC converter 3 via the second switch K2. The buck DC/DC converter 2 is connected to the low-voltage load 6, the starting battery 7 and the control module 5 respectively. The boost DC/DC converter 3 is connected to the high-voltage load 8 and the control module 5 respectively, which is connected to the power battery pack 9 via the main contactor K5. As shown in Fig. 1, the power battery pack 1 is connected to a battery manager 10. The control module 5 is connected to the auxiliary power module 4, the battery manager 10 and a photosensitive sensor 11. The auxiliary power module 4 is connected to the battery manager 10 via the fourth switch K4. The battery manager 10 is connected to the starting battery 7 via the third switch K3.

The low-voltage load 6 may be the load connected in series to the starting battery 7 comprising, for example, lamps, instrument panels and wipers etc.

The high-voltage load 8 may be the load to which the power battery pack 9 directly supplies power, comprising, for example but not limited hereto, air conditioner, steering electromotor, air compressors and wheel motors etc.

In some embodiment, the first switch K1, the second switch K2, the third switch K3 and the fourth switch K4 may be electric control relays or manual switches respectively. In some embodiment, the control module 5 may be a DSP chip.

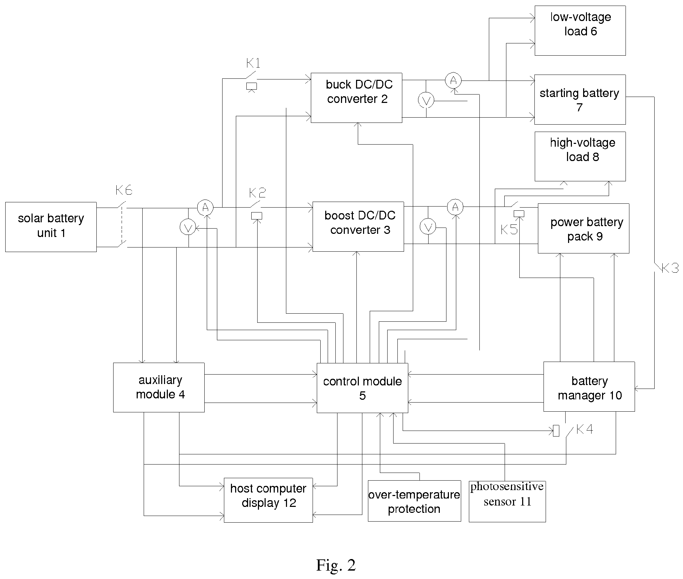

Fig. 2 is a schematic diagram illustrating a control system for powering a vehicle with solar energy according to another embodiment of the present disclosure, which is substantially the same with the aforementioned embodiment of the present disclosure except those as described hereinafter.

A service switch K6 is electrically connected with an output of the solar power battery 1 which is configured for switching on/off circuits between the solar power battery 1 and the buck DC/DC converter 2, between the solar power battery 1 and the boost DC/DC converter 3, between the solar power battery 1 and the control module 5 and between the solar power battery 1 and the auxiliary power module 4. When the entire control system is needed for maintenance, the service switch K6 is switched off to ensure the operation safety of the entire control system.

A host computer display 12 may be provided between the auxiliary module 4 and the control module 5. The host computer display 12 may display the operation state of the entire control system. The operation states of the entire control system may comprise, but not limited hereto, module operating states, such as the buck DC/DC converter 2 or the boost DC/DC converter 3, the output voltages and currents of the solar battery unit 1, the buck DC/DC converter 2 or the boost DC/DC converter 3, warning lamps for over-voltage, rectification efficiency, over-current and over-temperature etc, for example. In actual operation, the host computer display 12 is convenient for user to check the operation state of the entire control system and cope with the faults timely. Certainly, the host computer display 12 may display any states to users as condition may require.

The output of the solar battery unit 1 may be electrically connected with a voltmeter for detecting the output voltage of the solar battery unit 1 and an ammeter for detecting the output current of the solar battery unit 1. An output of the buck DC/DC converter 2 may have a voltmeter for detecting the output voltage of the buck DC/DC converter 2 and an ammeter for detecting the output current of the buck DC/DC converter 2. And an output of the boost DC/DC converter 3 may have a voltmeter for detecting the output voltage of the boost DC/DC converter 3 and an ammeter for detecting the output current of the boost DC/DC converter 3. Thus, the control module 5 may sample the output voltages and currents of the solar battery unit 1, the buck DC/DC converter 2 and the boost DC/DC converter 3. Based on the sampled voltages and currents thereof, maximum power point tracking (MPPT) may be utilized performed, and output PWM waves to adjust the buck DC/DC converter 2 and the boost DC/DC converter 3 respectively. In result, the utilization of the solar energy is improved and the MPPT is commonly used in the art, the detailed description of which is hereby omitted for clarity purpose.

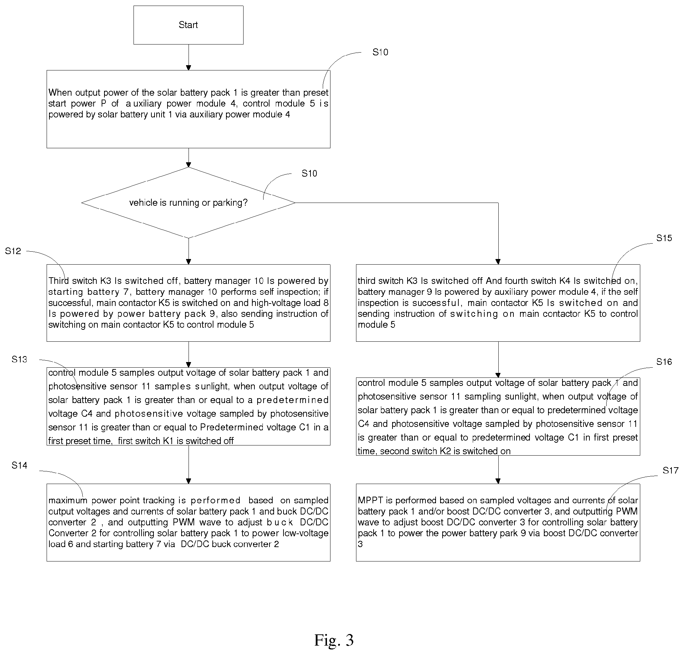

Fig. 3 shows a flow chart illustrating a control method of the control system for powering a vehicle with solar energy as described above. The method may comprise: powering the control module 5 via the auxiliary power module 4 by the solar battery unit 1 when an output power of the solar battery unit 1 has an output power greater than a predetermined start threshold P of the auxiliary power module 4;
powering the low-voltage load 6 and the starting battery 7 with the solar battery unit 1 via the buck DC/DC converter 2 under the control of the control module 5 when the vehicle is running; and
powering the power battery pack 9 with the solar battery unit 1 via the boost DC/DC converter 3 under the control of the control module 5when the vehicle is parking.

Furthermore, the step of powering the low-voltage load 6 and the starting battery 7 when the vehicle is running may further comprise the steps of:
switching on the third switch K3 under the control of the control module 5, powering the battery manager 10 with the starting battery 7, with the main contactor K5 being switched on and the high-voltage load 8 being powered by the power battery pack 9 if the self-inspection of the battery manager 10 is successful, also sending an instruction of switching on the main contactor K5 to the control module 5;
sampling an output voltage of the solar battery unit 1 by the control module 5, sampling sunlight with the photosensitive sensor 11, and switching on the first switch K1 when the output voltage of the solar battery unit 1 is greater than or equal to a predetermined voltage C4 and the photosensitive voltage sampled by the photosensitive sensor 11 is greater than or equal to a predetermined voltage C1 in a first predetermined time; and
sampling the output voltage and current of the solar battery unit 1 and/or sampling the output voltage and current of the buck DC/DC converter 2 by the control module 5 for maximum power point tracking, and outputting a PWM wave to adjust the buck DC/DC converter 2 for controlling the solar battery unit 1 to provide power to the low-voltage load 6 and the starting battery 7 via the buck DC/DC converter 2.

Furthermore, when the vehicle is parking, the solar battery unit 1 provides power to the power battery pack 9 via the boost DC/DC converter 3 under the control of the control module 5. The process includes following steps of:
switching off the third switch K3 and switching on the fourth switch K4 under the control of the control module 5, powering the battery manager 10 with the auxiliary power module 4, switching on the main contactor K5 if the self inspection of the battery manager 10 is successful and sending an instruction of closing the main contactor K5 to the control module 5;
sampling the output voltage of the solar battery unit 1 by the control module 5, sampling sunlight with the photosensitive sensor 11, and switching on the second switch K2 when the output voltage of the solar battery unit 1 is greater than or equal to the predetermined voltage C4 and the sunlight voltage sampled by the photosensitive sensor 11 is greater than or equal to the predetermined voltage C1; and
sampling the output voltage and current of the solar battery unit 1 and/or sampling the output voltage and current of the boost DC/DC converter 3 by the control module 5 for maximum power point tracking, and outputting a PWM wave to adjust the boost DC/DC converter 3 for controlling the solar battery unit 1 to provide power to the power battery pack 9 via the boost DC/DC converter 3.

As shown in Fig. 3, the control method may comprise the following steps.

S10: powering the control module 5 by the solar battery unit 1 via the auxiliary power module 4 when the output power of the solar battery unit 1 is greater than a predetermined start threshold P of the auxiliary power module 4;
S11: detecting the state of the vehicle and when the vehicle is running, performing the step S12, when the vehicle is parking, performing the step S15;
S12: when the vehicle is running, the third switch K3 is switched on by the control module 5, the battery manager 10 is powered by the solar battery unit 7, and the battery manager 10 performs self inspection; if the self inspection thereof is successful, the main contactor K5 is switched on and the high-voltage load 8 is powered by the power battery pack 9, also the instruction of switching on the main contactor K5 is sent to the control module 5;
S13: the control module 5 samples the output voltage of the solar battery unit 1 and the photosensitive sensor 11 samples the sunlight; when the output voltage of the solar battery unit 1 is greater than or equal to the predetermined voltage C4 and the photosensitive voltage sampled by the photosensitive sensor 11 is greater than or equal to the predetermined voltage C1 in a first predetermined time, the first switch K1 is switched on;
S14: the control module 5 samples the output voltages and currents of the solar battery unit 1 and/or the buck DC/DC converter 2, then maximum power point tracking is performed based on the sampled voltages and currents, and outputs the PWM wave to adjust the buck DC/DC converter 2 for controlling the solar battery unit 1 to provide power to the low-voltage load 6 and the starting battery 7 via the buck DC/DC converter 2;
S15: when the vehicle is parking, the third switch K3 is switched off by control module 5, and the fourth switch K4 is switched on, the battery manager 10 is powered by the auxiliary power module 4; if the self inspection of the battery manager 10 is successful, the main contactor K5 is switched on and the instruction of switching on the main contactor K5 is sent to the control module 5;
S16: the control module 5 samples the output voltage of the solar battery unit 1 and the photosensitive sensor 11 samples the sunlight, when the output voltage of the solar battery unit 1 is greater than or equal to the predetermined voltage C4 and the photosensitive voltage sampled by the photosensitive sensor 11 is greater than or equal to the predetermined voltage C1 in the first predetermined time, the second switch K2 is switched on;
S17: the control module 5 samples the output voltages and currents of the solar battery unit 1 and/or the boost DC/DC converter 3, then maximum power point tracking is performed based on the sampled voltages and currents, and outputs the PWM wave to adjust the boost DC/DC converter 3 for controlling the solar battery unit 1 to provide power to the power battery pack 9 via the boost DC/DC converter 3.

In one embodiment, the predetermined start threshold P of the auxiliary power module 4 may be about 30W to about 35W. In one embodiment, the first predetermined time may be about 5s to about 10s. In one embodiment, the predetermined voltage C1 may be about 1V to about 3V. In one embodiment, the predetermined voltage C4 may be about 84V to about 126V.

In one embodiment, for step S10, when the output power of the solar battery unit 1 is greater than the predetermined start threshold P of the auxiliary power module 4, the control module 5 is powered by the solar battery unit 1 via the auxiliary power module 4. The predetermined start threshold P of the auxiliary power module 4 is defined by the design parameters of the auxiliary power module 4 and may be, for example, 30W. From aforementioned description, the step S10 may be performed only if the output power of the solar battery unit 1 is greater than the predetermined start threshold P of the auxiliary power module 4, if not, the entire control system does not work, that is, the control module 5 powered by the solar battery unit 1 via the auxiliary power module 4 is not performed.

In one embodiment, for step S11, the control method may further comprise a step of detecting the state of the vehicle, which may further comprise the steps of: detecting whether the battery manager 10 sends an instruction of switching on the main contactor K5 in the second predetermined time, such as 20s-30s; and determining that the vehicle is running or parking based on whether the instruction of switching on the main contactor K5 is sent within the second predetermined time. Certainly, the description in step S11 is only one method for detecting the state of the vehicle, the vehicle state may also be determined by detecting the ignition switch position (ON or OFF position).

In one embodiment, for step S12, when the vehicle is running, the control module 5 switches on the switch K3, the battery manager 10 is powered by the solar battery unit 7, the battery manager 10 performs self inspection. The step of self inspection performed by the battery manager 10 may include: 1) detecting whether the voltage of each cell in the power battery pack 9 is over-voltage or under-voltage; detecting if each cell in the power battery pack 9 has a temperature within a first predetermined range; detecting whether the pre-charge of the main contactor K5 is finished or not; and detecting whether leakage current of the vehicle has a leakage current within a second predetermined range. It should be noted that the self inspection of the battery manager 10 is not limited to the four steps as described hereinabove.

If the self inspection performed by the battery manager 10 is successful, the main contactor K5 is switched on, the high-voltage load 8 is powered by the power battery 9 and the instruction of switching on the main contactor K5 is sent to the control module 5; if the self inspection performed by the battery manager 10 is not successful, the self inspection is performed in loop until the self inspection is successful, then a next step may be continued.

In one embodiment, for step S13, the control module 5 samples the output voltage of the solar battery unit 1 and the photosensitive sensor 11 samples the sunlight; when the output voltage of the solar battery unit 1 is greater than or equal to the predetermined voltage C4 and the photosensitive voltage sampled by the photosensitive sensor 11 is greater than or equal to the predetermined voltage C1 in a first predetermined time, such as, for example 5s, the first switch K1 is switched on. When the output voltage of the solar battery unit 1 is less than the predetermined voltage C4 and the photosensitive voltage is less than the predetermined voltage C1 in a first predetermined time such as, for example, 5s, the step is performed in loop until the output voltage of the solar battery unit 1 is greater than or equal to the predetermined voltage C4 and the photosensitive voltage sampled by the photosensitive sensor 11 is greater than or equal to the predetermined voltage C1 in a first predetermined time, then a next step may be continued.

In one embodiment, for step S14, the control module 5 samples the output voltages and currents of the solar battery unit 1 and/or the buck DC/DC converter 2, then maximum power point tracking may be performed based on the sampled voltages and currents, and outputs the PWM wave to adjust the buck DC/DC converter 2 for controlling the solar battery unit 1 to power the low-voltage load 6 and the starting battery 7 via the buck DC/DC converter 2. Due to the adoption of MPPT, the utilization of the solar energy may be further improved.

In one embodiment, for the step S15, the self inspection of the battery manager 10 is the same as that in step 12. Therefore, the detailed description is not exemplified herein for clarity purpose.

In one embodiment, for the step S16, the control module 5 samples the output voltage of the solar battery unit 1 and the photosensitive sensor 11 samples the sunlight, when the output voltage of the solar battery unit 1 is greater than or equal to the predetermined voltage C4 and the photosensitive voltage sampled by the photosensitive sensor 11 is greater than or equal to the predetermined voltage C1 in the first predetermined time such as, for example, 5s, the second switch K2 is switched on. When the output voltage of the solar battery unit 1 is less than the predetermined voltage C4 and the sunlight voltage is less than the predetermined voltage C1 in a first predetermined time such as, for example, 5s, the process is performed in loop until the output voltage of the solar battery unit 1 is greater than or equal to the predetermined voltage C4 and the photosensitive voltage is greater than or equal to the predetermined voltage C1 in a first predetermined time, then a next step may be continued.

In one embodiment, for the step S17, the control module 5 samples the output voltages and currents of the solar battery unit 1 and/or the boost DC/DC converter 3, then maximum power point tracking may be performed based on the sampled voltages and currents, and outputs the PWM wave to adjust the boost DC/DC converter 3 for controlling the solar battery unit 1 to power the power battery pack 9 via the boost DC/DC converter 3. At this moment, the power battery pack 9 storages the power converted from solar energy by the solar energy unit 1to power the high-voltage load 8 when the vehicle is running.

In one embodiment, when the vehicle is running, when the sunlight voltage sampled by the photosensitive sensor is less than the predetermined voltage C1 in the first predetermined time such as 5s∼10s, the switch K1 is switched off by the control module 5, and when the sunlight voltage sampled by the photosensitive sensor is greater than the predetermined voltage C3 in the third predetermined time such as 4s∼5s, the control switch K1 may be switched on by the control module 5.

When the vehicle is parking and if the sunlight voltage sampled by the photosensitive sensor is less than the predetermined voltage C1 in the first predetermined time such as 5s∼ 10s, the switch K2 is switched off by the control module 5, and if the photosensitive voltage sampled by the photosensitive sensor is greater than the predetermined voltage C3 in the third predetermined time such as 4s∼5s, the switch K2 may be switched on by the control module 5.

In one embodiment, when there are failure in the buck DC/DC converter 2 and/or the boost DC/DC converter 3, such as under-voltage input, an over-voltage output, an over-current output, an over-temperature or the starting battery being filled with power, the first switch K1 or the second switch K2 may be switched off by the control module 5 to protect the entire control system. To be specific, the buck DC/DC converter 2 has the following failures:
under-voltage input: when the output voltage of the solar battery unit 1, that is the input voltage of the buck DC/DC converter 2 is less than the predetermined voltage C2, the first switch K1 may be switched off by the control module 5;
over-voltage output: when the output voltage of the buck DC/DC converter 2 is greater than the predetermined voltage C5, the first switch K1 may be switched off by the control module 5;
over-current output: when the output current of the buck DC/DC converter 2 is greater than the predetermined current C6, the first switch K1 may be switched off by the control module 5;
over-temperature: when a voltage corresponding to the inner temperature of the buck DC/DC converter 2 is greater than a predetermined voltage C7 corresponding to a threshold temperature of the DC/DC converter 2, the first switch K1 may be switched off by the control module 5. In one embodiment, the voltage corresponding to the inner temperature of the buck DC/DC converter 2 may be determined by a thermistor provided inside the buck DC/DC converter 2;
starting battery being filled with power: when the output voltage of the buck DC/DC converter 2 is greater than the predetermined voltage C5, the first switch K1 may be switched off by the control module 5.

Similarly, the boost DC/DC converter 3 may have the following failures which may be coped with as following:
under-voltage input: when the output voltage of the solar battery unit 1, i.e. the input voltage of the boost DC/DC converter 3 is less than predetermined voltage C2, the second switch K2 may be switched off by the control module 5;
over-voltage output: when the output voltage of the boost DC/DC converter 3 is greater than the predetermined voltage C8, the second switch K2 may be switched off by the control module 5;
over-current output: when the output current of the boost DC/DC converter 3 is greater than the predetermined voltage C6, the second switch K2 may be switched off by the control module 5;
over-temperature: when a voltage corresponding to the inner temperature of the boost DC/DC converter 3 is greater than a predetermined voltage C7 corresponding to a threshold temperature of the boost DC/DC converter 3, the second switch K2 may be switched off by the control module 5. In one embodiment, the voltage corresponding to the inner temperature of the boost DC/DC converter 3 may be determined by a thermistor provided inside the boost DC/DC converter 3;
power battery pack being filled with power: when the output voltage of the boost DC/DC converter 3 is greater than the predetermined voltage C8, the second switch K2 may be switched off by the control module 5.

In one embodiment, the predetermined voltage C1 is 1V∼3V, the predetermined voltage C2 is 80V∼200V, the predetermined voltage C3 is 1.2V∼3.6V, the predetermined voltage C4 is 84V∼126V and the predetermined voltage C5 is U*120% where U is the rated voltage of the starting battery 7, the predetermined current C6 is I*120% where I is the rated output current of the buck DC/DC converter 2, the predetermined voltage C7 is 1V∼3V and the predetermined voltage C8 is the rated voltage or protecting voltage at which the power battery 9 is filled with. Obviously, the predetermined time, voltage and/or current of the present disclosure, rather than limiting hereto, may be designed as condition may require.

Although explanatory embodiment have been shown and described, it would be appreciated by those skilled in the art that changes, alternatives, and modifications can be made in the embodiment without departing from the principles of the disclosure. Such changes, alternatives, and modifications all fall into the scope of the claims and their equivalents.

## Claims

1. A control system for powering a vehicle with solar energy, comprising:
a solar battery unit (1);
a buck DC/DC converter (2) electrically connected with the solar battery unit (1) with a first switch (K1), which is electrically connected with a low-voltage load (6) and a starting battery (7) respectively;
a boost DC/DC converter (3) electrically connected with the solar battery unit (1) with a second switch (K2), which is electrically connected with a high-voltage load (8);
an auxiliary power module (4) electrically connected with the solar battery unit (1);
a control module (5) connected with the solar battery unit (1), the buck DC/DC converter (2), the boost DC/DC converter (3);
a power battery pack (9) electrically connected with the boost DC/DC converter (3) via a main contactor (K5);
a battery manager (10) electrically connected with the control module (5), the power battery pack (9), the starting battery via a third switch (K3), and the auxiliary power module (4) via a fourth switch (K4) respectively; and
a photosensitive sensor (11) connected with the control module (5);
wherein the control module is configured to power the low-voltage load (6) and the starting battery (7) with the solar battery unit (1) via the buck DC/DC converter (2) when the vehicle is running; and
the control module is further configured to power the power battery pack (9) with the solar battery unit (1) via the boost DC/DC converter (3) when the vehicle is parking.

2. The control system of claim 1, wherein the first switch, the second switch, the third switch and the fourth switch are electric control relays.

3. The control system of claim 1, further comprising:
a service switch (K6) electrically connected with an output of the solar battery unit (1) for switching on/off circuits between the solar battery unit (1) and the buck DC/DC converter (2), between the solar battery unit (1) and the boost DC/DC converter (2), between the solar battery unit (1) and the control module (5) and between the solar battery unit (1) and the auxiliary power module (4).

4. The control system of claim 1, wherein a host computer display (12) is provided between the auxiliary module (4) and the control module (5).

5. The control system of any one of claims 1 to 4, wherein the output of the solar battery unit (1) also has a voltmeter for detecting an output voltage of the solar battery unit (1) and an ammeter for detecting an output current of the solar battery unit (1); and/or
an output of the buck DC/DC converter (2) has a voltmeter for detecting an output voltage of the buck DC/DC converter (2) and an ammeter for detecting an output current of the buck DC/DC converter (2); and/or
an output of the boost DC/DC converter (3) has a voltmeter for detecting an output voltage of the boost DC/DC converter (3) and an ammeter for detecting an output current of the boost DC/DC converter (3).

6. A control method of the control system for powering a vehicle with solar energy of claim 1, comprising the steps of:
powering the control module (5) via the auxiliary power module (4) by the solar battery unit (1) when an output power of the solar battery unit (1) has an output power greater than a predetermined start threshold P of the auxiliary power module (4);
powering the low-voltage load (6) and the starting battery (7) with the solar battery unit (1) via the buck DC/DC converter (2) under the control of the control module (5) when the vehicle is running; and
powering the power battery pack (9) with the solar battery unit (1) via the boost DC/DC converter (3) under the control of the control module (5) when the vehicle is parking.

7. The control method of claim 6, wherein the step of powering the low-voltage load (6) and the starting battery (7) when the vehicle is running further comprises the steps of:
switching on the third switch (K3) under the control of the control module (5), powering the battery manager (10) with the starting battery (7), with the main contactor (K5) being switched on and the high-voltage load (8) being powered by the power battery pack (9) if the self-inspection of the battery manager (10) is successful, sending an instruction of switching on the main contactor (K5) to the control module (5);
sampling an output voltage of the solar battery unit (1) by the control module (5), sampling sunlight with the photosensitive sensor (11), and switching on the first switch (K1) when the output voltage of the solar battery unit (1) is greater than or equal to a predetermined voltage C4 and a photosensitive voltage sampled by the photosensitive sensor (11) is greater than or equal to a predetermined voltage C1 in a first predetermined time; and
sampling the output voltage and current of the solar battery unit (1) and/or sampling the output voltage and current of the buck DC/DC converter (2) by the control module (5) for maximum power point tracking, and outputting a PWM wave to adjust the buck DC/DC converter for controlling the solar battery unit to provide power to the low-voltage load and the starting battery (7) via the buck DC/DC converter (2).

8. The control method of claim 7, further comprising the steps of:
switching off the first switch (K1) under the control of the control module (5) when the photosensitive voltage sampled by the photosensitive sensor is less than the predetermined voltage C1 in a third predetermined time;
switching on the first switch (K1) under the control of the control module (5) when the photosensitive voltage sampled by the photosensitive sensor is greater than the predetermined voltage C3 in a fourth predetermined time; and/or
switching off the first switch (K1) when an input under-voltage, output over-voltage, output over-current or over-temperature occurs in the buck DC/DC converter (2), or the starting battery (7) is filled with power.

9. The control method of claim 6, wherein the step of powering the power battery pack when the vehicle is parking comprises the steps of:
switching off the third switch (K3) and switching on the fourth switch (K4) under the control of the control module (5), powering the battery manager (10) with the auxiliary power module (4), switching on the main contactor (K5) if the self inspection of the battery manager (10) is successful and sending an instruction of closing the main contactor (K5) to the control module (5);
sampling an output voltage of the solar battery unit (1) by the control module (5), sampling sunlight with the photosensitive sensor (11), and switching on the second switch (K2) when the output voltage of the solar battery unit (1) is greater than or equal to the predetermined voltage C4 and the photosensitive voltage sampled by the photosensitive sensor (11) is greater than or equal to the predetermined voltage C1; and
sampling the output voltage and current of the solar battery unit (1) and/or sampling the output voltage and current of the boost DC/DC converter (3) by the control module (5) for maximum power point tracking, and outputting a PWM wave to adjust the boost DC/DC converter (3) for controlling the solar battery unit (1) to provide power to the power battery pack (9) via the boost DC/DC converter (3).

10. The control method of claim 8, further comprising:
switching off the second switch (K2) when the photosensitive voltage sampled by the photosensitive sensor (11) is less than the predetermined voltage C1 in the third predetermined time;
switching on the second switch (K2) when the photosensitive voltage sampled by the photosensitive sensor (11) is greater than the predetermined voltage C3 in the fourth predetermined time; and/or
switching off the second switch (K2) when the input under-voltage, output over-voltage, output over-current or over-temperature occurs in the boost DC/DC converter (3), or the power battery pack (9) is filled with power.

11. The control method of any one of claims 7-10, wherein the step of self inspection performed by the battery manager (10) further comprises the steps of:
detecting whether a voltage of each cell in the power battery pack (9) is over-voltage or under-voltage;
detecting if each cell in the power battery pack (9) has a temperature within a first predetermined range;
detecting whether a pre-charge of the main contactor (K5) is finished or not; and
detecting whether leakage current of the vehicle has a leakage current within a second predetermined range.

12. The control method of any one of claims 7-10, wherein the predetermined start threshold P of the auxiliary power module is about 30W to about 35W, the first predetermined time is about 5s to about 10s, the third predetermined time is about 2s to about 3s, the fourth predetermined time is about 4s to about 5s, the predetermined voltage C1 is about 1V to about 3V, the predetermined voltage C3 is about 1.2V to about 3.6V, and the predetermined voltage C4 is about 84V to about 126V.

13. The control method of any one of claims 7-10, further comprising:
if the self inspection performed by the battery manager (10) is not successful, performing the step of self inspection in loop until the self inspection is successful.

14. The control method of any one of claims 7-9, further comprising:
when the output voltage of the solar battery (1) unit is less than a predetermined voltage C4 and the photosensitive voltage sampled by the photosensitive sensor (11) is less than or equal to a predetermined voltage C1 in a first predetermined time, performing this step in loop until the output voltage of the solar battery unit (1) is greater than or equal to a predetermined voltage C4 and the photosensitive voltage sampled by the photosensitive sensor (11) is greater than or equal to the predetermined voltage C1.

15. The control method of claim 6, further comprising the step of detecting the state of the vehicle, wherein the step of detecting the state of the vehicle comprises steps of:
detecting whether the battery manager (10) sends out an instruction of switching on the main contactor (K5) in a second predetermined time;
determining that the vehicle is running or parking based on whether the instruction of switching on the main contactor (K5) is sent within the second predetermined time.

## Patentansprüche

1. Ein Steuersystem zum Treiben eines Fahrzeugs mit Solarenergie, das folgende Merkmale aufweist:
eine Solarbatterieeinheit (1);
einen Stoßgleichspannungswandler (2), der mit der Solarbatterieeinheit (1) mit einem ersten Schalter (K1) elektrisch verbunden ist, der mit einer Niederspannungslast (6) beziehungsweise einer Startbatterie (7) elektrisch verbunden ist;
einen Schubgleichspannungswandler (3), der mit der Solarbatterieeinheit (1) mit einem zweiten Schalter (K2) elektrisch verbunden ist, der mit einer Hochspannungslast (8) elektrisch verbunden ist;
ein zusätzliches Leistungsmodul (4), das mit der Solarbatterieeinheit (1) elektrisch verbunden ist;
ein Steuermodul (5), das mit der Solarbatterieeinheit (1), dem Stoßgleichspannungswandler (2), dem Schubgleichspannungswandler (3) verbunden ist;
ein Leistungsbatteriesatz (9), der mit dem Schubgleichspannungswandler (3) über ein Hauptschütz (K5) elektrisch verbunden ist;
einen Batteriemanager (10), der mit dem Steuermodul (5), dem Leistungsbatteriesatz (9), der Startbatterie über einen dritten Schalter (K3) beziehungsweise dem zusätzlichen Leistungsmodul (4) über einen vierten Schalter (K4) elektrisch verbunden ist; und
einen lichtempfindlichen Sensor (11), der mit dem Steuermodul (5) verbunden ist;
wobei das Steuermodul dazu konfiguriert ist, die Niederspannungslast (6) und die Startbatterie (7) mit der Solarbatterieeinheit (1) über den Stoßgleichspannungswandler (2) zu versorgen, wenn das Fahrzeug fährt; und
das Steuermodul ferner dazu konfiguriert ist, den Leistungsbatteriesatz (9) mit der Solarbatterieeinheit (1) über den Schubgleichspannungswandler (3) zu treiben, wenn das Fahrzeug parkt.

2. Das Steuersystem gemäß Anspruch 1, bei dem der erste Schalter, der zweite Schalter, der dritte Schalter und der vierte Schalter elektrische Steuerrelais sind.

3. Das Steuersystem gemäß Anspruch 1, das ferner folgendes Merkmal aufweist:
einen Serviceschalter (K6), der mit einem Ausgang der Solarbatterieeinheit (1) elektrisch verbunden ist, um Schaltungen zwischen der Solarbatterieeinheit (1) und dem Stoßgleichspannungswandler (2), zwischen der Solarbatterieeinheit (1) und dem Schubgleichspannungswandler (2), zwischen der Solarbatterieeinheit (1) und dem Steuermodul (5) und zwischen der Solarbatterieeinheit (1) und dem zusätzlichen Leistungsmodul (4) ein- und auszuschalten

4. Das Steuersystem gemäß Anspruch 1, bei dem eine Host-Computeranzeige (12) zwischen dem zusätzlichen Modul (4) und dem Steuermodul (5) vorgesehen ist.

5. Das Steuersystem gemäß einem der Ansprüche 1 bis 4, bei dem der Ausgang der Solarbatterieeinheit (1) auch ein Voltmeter zum Erfassen einer Ausgangsspannung der Solarbatterieeinheit (1) und ein Amperemeter zum Erfassen eines Ausgangsstroms der Solarbatterieeinheit (1) aufweist und/oder
ein Ausgang des Stoßgleichspannungswandlers (2) ein Voltmeter zum Erfassen einer Ausgangsspannung des Stoßgleichspannungswandlers (2) und ein Amperemeter zum Erfassen eines Ausgangsstroms des Stoßgleichspannungswandlers (2) aufweist und/oder
ein Ausgang des Schubgleichspannungswandlers (3) ein Voltmeter zum Erfassen einer Ausgangsspannung des Schubgleichspannungswandlers (3) und ein Amperemeter zum Erfassen eines Ausgangsstroms des Schubgleichspannungswandlers (3) aufweist.

6. Ein Steuerverfahren des Steuersystems zum Treiben eines Fahrzeugs mit Solarenergie gemäß Anspruch 1, das folgende Schritte aufweist:
Treiben des Steuermoduls (5) über das zusätzliche Leistungsmodul (4) durch die Solarbatterieeinheit (1), wenn eine Ausgangsleistung der Solarbatterieeinheit (1) eine Ausgangsleistung aufweist, die größer als ein vorbestimmter Startschwellenwert P des zusätzlichen Leistungsmoduls (4) ist;
Treiben der Niederspannungslast (6) und der Startbatterie (7) mit der Solarbatterieeinheit (1) über den Stoßgleichspannungswandler (2) unter der Steuerung des Steuermoduls (5), wenn das Fahrzeug fährt; und
Treiben des Leistungsbatteriesatzes (9) mit der Solarbatterieeinheit (1) über den Schubgleichspannungswandler (3) unter der Steuerung des Steuermoduls (5), wenn das Fahrzeug parkt.

7. Das Steuerverfahren gemäß Anspruch 6, bei dem der Schritt des Treibens der Niederspannungslast (6) und der Startbatterie (7), wenn das Fahrzeug fährt, ferner folgende Schritte aufweist:
Einschalten des dritten Schalters (K3) unter der Steuerung des Steuermoduls (5), Treiben des Batteriemanagers (10) mit der Startbatterie (7), wobei das Hauptschütz (K5) eingeschaltet wird und die Hochspannungslast (8) durch den Leistungsbatteriesatz (9) getrieben wird, falls die Selbstprüfung des Batteriemanagers (10) erfolgreich ist, Senden eines Befehls zum Einschalten des Hauptschützes (K5) an das Steuermodul (5);
Abtasten einer Ausgangsspannung der Solarbatterieeinheit (1) durch das Steuermodul (5), Abtasten von Sonnenlicht mit dem lichtempfindlichen Sensor (11) und Einschalten des ersten Schalters (K1), wenn die Ausgangsspannung der Solarbatterieeinheit (1) größer als oder gleich einer vorbestimmten Spannung C4 ist und eine lichtempfindliche Spannung, die durch den lichtempfindlichen Sensor (11) abgetastet wird, in einer ersten vorbestimmten Zeit größer als oder gleich einer vorbestimmten Spannung C1 ist; und
Abtasten der Ausgangsspannung und des Ausgangsstroms der Solarbatterieeinheit (1) und/oder Abtasten der Ausgangsspannung und des Ausgangsstroms des Stoßgleichspannungswandlers (2) durch das Steuermodul (5) für ein Maximal-Leistungspunkt-Verfolgen sowie Ausgeben einer PWM-Welle, um den Stoßgleichspannungswandler zum Steuern der Solarbatterieeinheit dahingehend einzustellen, dass die Niederspannungslast und die Startbatterie (7) über den Stoßgleichspannungswandler (2) mit Leistung versorgt werden.

8. Das Steuerverfahren gemäß Anspruch 7, das ferner folgende Schritte aufweist:
Ausschalten des ersten Schalters (K1) unter der Steuerung des Steuermoduls (5), wenn die lichtempfindliche Spannung, die durch den lichtempfindlichen Sensor abgetastet wird, in einer dritten vorbestimmten Zeit kleiner als die vorbestimmte Spannung C1 ist;
Einschalten des ersten Schalters (K1) unter der Steuerung des Steuermoduls (5), wenn die lichtempfindliche Spannung, die durch den lichtempfindlichen Sensor abgetastet wird, in einer vierten vorbestimmten Zeit größer als die vorbestimmte Spannung C3 ist; und/oder
Ausschalten des ersten Schalters (K1), wenn eine Eingangsunterspannung, eine Ausgangsüberspannung, ein Ausgangsüberstrom oder eine Übertemperatur in dem Stoßgleichspannungswandler (2) auftritt oder die Startbatterie (7) mit Leistung gefüllt wird.

9. Das Steuerverfahren gemäß Anspruch 6, bei dem der Schritt des Treibens des Leistungsbatteriesatzes, wenn das Fahrzeug parkt, folgende Schritte aufweist:
Ausschalten des dritten Schalters (K3) und Einschalten des vierten Schalters (K4) unter der Steuerung des Steuermoduls (5), Treiben des Batteriemanagers (10) mit dem zusätzlichen Leistungsmodul (4), Einschalten des Hauptschützes (K5), falls die Selbstprüfung des Batteriemanagers (10) erfolgreich ist, und Senden eines Befehls zum Schließen des Hauptschützes (K5) an das Steuermodul (5);
Abtasten einer Ausgangsspannung der Solarbatterieeinheit (1) durch das Steuermodul (5), Abtasten von Sonnenlicht mit dem lichtempfindlichen Sensor (11) und Einschalten des zweiten Schalters (K2), wenn die Ausgangsspannung der Solarbatterieeinheit (1) größer als oder gleich der vorbestimmten Spannung C4 ist und die lichtempfindliche Spannung, die durch den lichtempfindlichen Sensor (11) abgetastet wird, größer als oder gleich der vorbestimmten Spannung C1 ist; und
Abtasten der Ausgangsspannung und des Ausgangsstroms der Solarbatterieeinheit (1) und/oder Abtasten der Ausgangsspannung und des Ausgangsstroms des Schubgleichspannungswandlers (3) durch das Steuermodul (5) für ein Maximal-Leistungspunkt-Verfolgen sowie Ausgeben einer PWM-Welle, um den Schubgleichspannungswandler (3) zum Steuern der Solarbatterieeinheit (1) dahingehend einzustellen, dass der Leistungsbatteriesatz (9) über den Schubgleichspannungswandler (3) mit Leistung versorgt wird.

10. Das Steuerverfahren gemäß Anspruch 8, das ferner folgende Schritte aufweist:
Ausschalten des zweiten Schalters (K2), wenn die lichtempfindliche Spannung, die durch den lichtempfindlichen Sensor (11) abgetastet wird, in der dritten vorbestimmten Zeit kleiner als die vorbestimmte Spannung C1 ist;
Einschalten des zweiten Schalters (K2), wenn die lichtempfindliche Spannung, die durch den lichtempfindlichen Sensor (11) abgetastet wird, in der vierten vorbestimmten Zeit größer als die vorbestimmte Spannung C3 ist; und/oder
Ausschalten des zweiten Schalters (K2), wenn die Eingangsunterspannung, die Ausgangsüberspannung, der Ausgangsüberstrom oder die Übertemperatur in dem Schubgleichspannungswandler (3) auftritt oder wenn der Leistungsbatteriesatz (9) mit Leistung gefüllt wird.

11. Das Steuerverfahren gemäß einem der Ansprüche 7 bis 10, bei dem der Schritt der Selbstprüfung, der durch den Batteriemanager (10) durchgeführt wird, ferner folgende Schritte aufweist:
Erfassen, ob eine Spannung jeder Zelle in dem Leistungsbatteriesatz (9) eine Überspannung oder eine Unterspannung ist;
Erfassen, ob jede Zelle in dem Leistungsbatteriesatz (9) eine Temperatur innerhalb eines ersten vorbestimmten Bereichs aufweist;
Erfassen, ob eine Vorladung des Hauptschützes (K5) abgeschlossen ist oder nicht; und
Erfassen, ob der Leckstrom des Fahrzeugs einen Leckstrom innerhalb eines zweiten vorbestimmten Bereichs aufweist.

12. Das Steuerverfahren gemäß einem der Ansprüche 7 bis 10, bei dem der vorbestimmte Startschwellenwert P des zusätzlichen Leistungsmoduls etwa 30 W bis etwa 35 W beträgt, die erste vorbestimmte Zeit etwa 5 s bis etwa 10 s beträgt, die dritte vorbestimmte Zeit etwa 2 s bis etwa 3 s beträgt, die vierte vorbestimmte Zeit etwa 4 s bis etwa 5 s beträgt, die vorbestimmte Spannung C1 etwa 1 V bis etwa 3 V beträgt, die vorbestimmte Spannung C3 etwa 1,2 V bis etwa 3,6 V beträgt und die vorbestimmte Spannung C4 etwa 84 V bis etwa 126 V beträgt.

13. Das Steuerverfahren gemäß einem der Ansprüche 7 bis 10, das ferner folgenden Schritt aufweist:
wenn die durch den Batteriemanager (10) durchgeführte Selbstprüfung nicht erfolgreich ist, Durchführen des Schrittes einer Selbstprüfung in einer Schleife, bis die Selbstprüfung erfolgreich ist.

14. Das Steuerverfahren gemäß einem der Ansprüche 7 bis 9, das ferner folgenden Schritt aufweist:
wenn die Ausgangsspannung der Solarbatterieeinheit (1) kleiner als eine vorbestimmte Spannung C4 ist und die lichtempfindliche Spannung, die durch den lichtempfindlichen Sensor (11) abgetastet wird, in einer ersten vorbestimmten Zeit kleiner als oder gleich einer vorbestimmten Spannung C1 ist, Durchführen dieses Schrittes in einer Schleife, bis die Ausgangsspannung der Solarbatterieeinheit (1) größer als oder gleich einer vorbestimmten Spannung C4 ist und die lichtempfindliche Spannung, die durch den lichtempfindlichen Sensor (11) abgetastet wird, größer als oder gleich der vorbestimmten Spannung C1 ist.

15. Das Steuerverfahren gemäß Anspruch 6, das ferner den Schritt eines Erfassens des Fahrzeugzustands aufweist, wobei der Schritt des Erfassens des Fahrzeugzustands die folgenden Schritte aufweist:
Erfassen, ob der Batteriemanager (10) in einer zweiten vorbestimmten Zeit einen Befehl zum Einschalten des Hauptschützes (K5) ausgibt;
Bestimmen, dass das Fahrzeug läuft oder parkt, basierend darauf, ob der Befehl zum Einschalten des Hauptschützes (K5) innerhalb der zweiten vorbestimmten Zeit gesendet wird.

## Revendications

1. Système de commande d'alimentation de véhicule en énergie solaire, comprenant:
une unité de batterie solaire (1);
un convertisseur CC/CC abaisseur (2) connecté électriquement à l'unité de batterie solaire (1) avec un premier interrupteur (K1) qui est connecté électriquement à respectivement une charge de basse tension (6) et une batterie de démarrage (7);
un convertisseur CC/CC élévateur (3) connecté électriquement à l'unité de batterie solaire (1) avec un deuxième interrupteur (K2) qui est connecté électriquement à une charge de haute tension (8);
un module de puissance auxiliaire (4) connecté électriquement à l'unité de batterie solaire (1);
un module de commande (5) connecté à l'unité de batterie solaire (1), au convertisseur CC/CC abaisseur (2), au convertisseur CC/CC élévateur (3);
un kit de batterie de puissance (9) connecté électriquement au convertisseur CC/CC élévateur (3) par l'intermédiaire d'un contacteur principal (K5);
un gestionnaire de batterie (10) connecté électriquement respectivement au module de commande (5), au kit de batterie de puissance (9), à la batterie de démarrage par l'intermédiaire d'un troisième interrupteur (K3) et au module de puissance auxiliaire (4) par l'intermédiaire d'un quatrième interrupteur (K4); et
un capteur photosensible (11) connecté au module de commande (5);
dans lequel le module de commande est configuré pour alimenter la charge de basse tension (6) et la batterie de démarrage (7) par l'unité de batterie solaire (1) par l'intermédiaire du convertisseur CC/CC abaisseur (2) lorsque le véhicule est en marche; et
le module de commande est par ailleurs configuré pour alimenter le kit de batterie de puissance (9) par l'unité de batterie solaire (1) par l'intermédiaire du convertisseur CC/CC élévateur (3) lorsque le véhicule entre en stationnement.

2. Système de commande selon la revendication 1, dans lequel le premier interrupteur, le deuxième interrupteur, le troisième interrupteur et le quatrième interrupteur sont des relais de commande électriques.

3. Système de commande selon la revendication 1, comprenant par ailleurs:
un interrupteur de service (K6) connecté électriquement à une sortie de l'unité de batterie solaire (1) pour activer/désactiver les circuits entre l'unité de batterie solaire (1) et le convertisseur CC/CC abaisseur (2), entre l'unité de batterie solaire (1) et le convertisseur CC/CC élévateur (2), entre l'unité de batterie solaire (1) et le module de commande (5) et entre l'unité de batterie solaire (1) et le module de puissance auxiliaire (4).

4. Système de commande selon la revendication 1, dans lequel un écran d'affichage d'ordinateur hôte (12) est prévu entre le module auxiliaire (4) et le module de commande (5).

5. Système de commande selon l'une quelconque des revendications 1 à 4, dans lequel la sortie de l'unité de batterie solaire (1) présente également un voltmètre destiné à détecter une tension de sortie de l'unité de batterie solaire (1) et un ampèremètre destiné à détecter un courant de sortie de l'unité de batterie solaire (1); et/ou
une sortie du convertisseur CC/CC abaisseur (2) comporte un voltmètre destiné à détecter une tension de sortie du convertisseur CC/CC abaisseur (2) et un ampèremètre destiné à détecter un courant de sortie du convertisseur CC/CC abaisseur (2); et/ou
une sortie du convertisseur CC/CC élévateur (3) comporte un voltmètre destiné à détecter une tension de sortie du convertisseur CC/CC élévateur (3) et un ampèremètre destiné à détecter un courant de sortie du convertisseur CC/CC élévateur (3).

6. Procédé de commande du système de commande pour alimenter un véhicule en énergie solaire selon la revendication 1, comprenant les étapes consistant à:
alimenter le module de commande (5) par l'intermédiaire du module de puissance auxiliaire (4) par l'unité de batterie solaire (1) lorsqu'une puissance de sortie de l'unité de batterie solaire (1) présente une puissance de sortie supérieure à un seuil de démarrage P prédéterminé du module d'alimentation auxiliaire (4);
alimenter la charge de basse tension (6) et la batterie de démarrage (7) par l'unité de batterie solaire (1) par l'intermédiaire du convertisseur CC/CC abaisseur (2) sous le contrôle du module de commande (5) lorsque le véhicule est en marche; et
alimenter le kit de batterie de puissance (9) par l'unité de batterie solaire (1) par l'intermédiaire du convertisseur CC/CC élévateur (3) sous le contrôle du module de commande (5) lorsque le véhicule entre en stationnement.

7. Procédé de commande selon la revendication 6, dans lequel l'étape consistant à alimenter la charge de basse tension (6) et la batterie de démarrage (7) lorsque le véhicule est en marche comprend par ailleurs les étapes consistant à:
activer le troisième interrupteur (K3) sous le contrôle du module de commande (5), alimenter le gestionnaire de batterie (10) par la batterie de démarrage (7), le contacteur principal (K5) étant activé et la charge de haute tension (8) étant alimentée par le kit de batterie de puissance (9), si l'auto-inspection du gestionnaire de batterie (10) est fructueuse, envoyer une instruction d'activer le contacteur principal (K5) au module de commande (5);
échantillonner une tension de sortie de l'unité de batterie solaire (1) par le module de commande (5), échantillonner la lumière solaire par le capteur photosensible (11) et activer le premier interrupteur (K1) lorsque la tension de sortie de l'unité de batterie solaire (1) est supérieure ou égale à une tension C4 prédéterminée et une tension photosensible échantillonnée par le capteur photosensible (11) est supérieure ou égale à une tension C1 prédéterminée pendant un premier laps de temps prédéterminé; et
échantillonner la tension et le courant de sortie de l'unité de batterie solaire (1) et/ou échantillonner la tension et le courant de sortie du convertisseur CC/CC abaisseur (2) par le module de commande (5) pour un suivi du point de puissance maximale, et sortir une onde PWM pour ajuster le convertisseur CC/CC abaisseur pour commander l'unité de batterie solaire pour alimenter la charge de basse tension et la batterie de démarrage (7) par l'intermédiaire du convertisseur CC/CC abaisseur (2).

8. Procédé de commande selon la revendication 7, comprenant par ailleurs les étapes consistant à:
désactiver le premier interrupteur (K1) sous le contrôle du module de commande (5) lorsque la tension photosensible échantillonnée par le capteur photosensible est inférieure à la tension C1 prédéterminée pendant un troisième laps de temps prédéterminé;
activer le premier interrupteur (K1) sous le contrôle du module de commande (5) lorsque la tension photosensible échantillonnée par le capteur photosensible est supérieure à la tension C3 prédéterminée pendant un quatrième laps de temps prédéterminé; et/ou
désactiver le premier interrupteur (K1) lorsqu'une sous-tension d'entrée, une surtension de sortie, une surintensité de sortie ou une surchauffe se produit dans le convertisseur CC/CC abaisseur (2), ou la batterie de démarrage (7) est remplie d'énergie.

9. Procédé de commande selon la revendication 6, dans lequel l'étape consistant à alimenter le kit de batterie de puissance lorsque le véhicule entre en stationnement comprend les étapes consistant à:
désactiver le troisième interrupteur (K3) et activer le quatrième interrupteur (K4) sous le contrôle du module de commande (5), alimenter le gestionnaire de batterie (10) par le module d'alimentation auxiliaire (4), activer le contacteur principal (K5) si l'auto-inspection du gestionnaire de batterie (10) est fructueuse et envoyer une instruction de fermeture du contacteur principal (K5) au module de commande (5);
échantillonner une tension de sortie de l'unité de batterie solaire (1) par le module de commande (5), échantillonner la lumière de soleil par le capteur photosensible (11) et activer le deuxième interrupteur (K2) lorsque la tension de sortie de l'unité de batterie solaire (1) est supérieure ou égale à la tension prédéterminée C4 et que la tension photosensible échantillonnée par le capteur photosensible (11) est supérieure ou égale à la tension C1 prédéterminée; et
échantillonner la tension et le courant de sortie de l'unité de batterie solaire (1) et/ou échantillonner la tension et le courant de sortie du convertisseur CC/CC élévateur (3) par le module de commande (5) pour un suivi du point de puissance maximale, et sortir une onde PWM pour ajuster le convertisseur CC/CC élévateur (3) pour commander l'unité de batterie solaire (1) pour alimenter le kit de batterie de puissance (9) par l'intermédiaire du convertisseur CC/CC élévateur (3).

10. Procédé de commande selon la revendication 8, comprenant par ailleurs le fait de:
désactiver le deuxième interrupteur (K2) lorsque la tension photosensible échantillonnée par le capteur photosensible (11) est inférieure à la tension C1 prédéterminée pendant le troisième laps de temps prédéterminé;
activer le deuxième interrupteur (K2) lorsque la tension photosensible échantillonnée par le capteur photosensible (11) est supérieure à la tension C3 prédéterminée pendant le quatrième laps de temps prédéterminé; et/ou
désactiver le deuxième interrupteur (K2) lorsque le sous-tension d'entrée, la surtension de sortie, le surintensité de sortie ou la surchauffe se produit dans le convertisseur CC/CC élévateur (3) ou lorsque le kit de batterie de puissance (9) est rempli d'énergie.

11. Procédé de commande selon l'une quelconque des revendications 7 à 10, dans lequel l'étape d'auto-inspection effectuée par le gestionnaire de batterie (10) comprend par ailleurs les étapes consistant à:
détecter si une tension de chaque cellule dans le kit de batterie de puissance (9) est une surtension ou une sous-tension;
détecter si chaque cellule du kit de batterie d'énergie (9) présente une température comprise dans une première plage prédéterminée;
détecter si une pré-charge du contacteur principal (K5) est terminée ou non; et
détecter si le courant de fuite du véhicule présente un courant de fuite compris dans une deuxième plage prédéterminée.

12. Procédé de commande selon l'une quelconque des revendications 7 à 10, dans lequel le seuil de démarrage P prédéterminé du module d'alimentation auxiliaire est d'environ 30W à environ 35W, le premier laps de temps prédéterminé est d'environ 5s à environ 10s, le troisième laps de temps prédéterminé est d'environ 2s à environ 3s, le quatrième laps de temps prédéterminé est d'environ 4s à environ 5s, la tension C1 prédéterminée est d'environ 1V à environ 3V, la tension C3 prédéterminée est d'environ 1,2V à environ 3,6V et la tension C4 prédéterminée est d'environ 84V à environ 126V.

13. Procédé de commande selon l'une quelconque des revendications 7 à 10, comprenant par ailleurs le fait de:
si l'auto-inspection effectuée par le gestionnaire de batterie (10) n'est pas fructueuse, effectuer l'étape d'auto-inspection en boucle jusqu'à ce que l'auto-inspection soit fructueuse.

14. Procédé de commande selon l'une quelconque des revendications 7 à 9, comprenant par ailleurs le fait de:
lorsque la tension de sortie de l'unité de batterie solaire (1) est inférieure à une tension C4 prédéterminée et que la tension photosensible échantillonnée par le capteur photosensible (11) est inférieure ou égale à une tension C1 prédéterminée pendant un premier laps de temps prédéterminé, effectuer cette étape en boucle jusqu'à ce que la tension de sortie de l'unité de batterie solaire (1) soit supérieure ou égale à une tension C4 prédéterminée et que la tension photosensible échantillonnée par le capteur photosensible (11) soit supérieure ou égale à la tension C1 prédéterminée.

15. Procédé de commande selon la revendication 6, comprenant par ailleurs l'étape consistant à détecter l'état du véhicule, dans lequel l'étape de détection de l'état du véhicule comprend les étapes consistant à:
détecter si le gestionnaire de batterie (10) envoie une instruction d'activation du contacteur principal (K5) dans un deuxième laps de temps prédéterminé;
déterminer si le véhicule est en marche ou entre en stationnement sur base de si l'instruction d'activer le contacteur principal (K5) est envoyée ou non pendant le deuxième laps de temps prédéterminé.
